# EUROPEAN PATENT APPLICATION

(11) **EP 1 394 658 A1**
(43) Date of publication of application: **03.03.2004**
(21) Application number: 02255809.2
(22) Date of filing: 20.08.2002
(51) Int. Cl.: G06F 1/16

(54) **Cover for a hand-held device**

(71) Applicant: High Tech Computer Corp., Taoyuan (TW)
(72) Inventor: Hsu, His-Hsing, Shinshing Tsun, Luju Shiang, Taoyuan (TW); Huang, Chien-Lung, Taoyuan (TW); Wang, William, Taipei (TW)
(74) Representative: Cheyne, John Robert Alexander Mackenzie

(57) **Abstract**

A hand-held device. The hand-held device comprises a panel assembly, a cover, a speaker and a receiver. The cover, having a first surface facing the panel assembly and a second surface opposite to the first surface, is disposed on the panel assembly in a rotatable manner. The speaker is disposed on the first surface of the cover. The receiver is disposed on the second surface of the cover.

## Description

### BACKGROUND OF THE INVENTION

### Field of the invention

The invention relates to a hand-held device; in particular, the invention relates to a hand-held device with a speaker and a receiver.

### Description of the related art

A personal digital assistant (PDA) can be a small computer system which may include an electronic calendar, e-mail transmitting and receiving capabilities, faxing capabilities, a memory for recording appointments and things to do, word processor software for writing letters and notes, buttons and keys for entering information, a touch-sensitive display for displaying and entering information, connectors for connecting the personal digital assistant with a computer system and a printer and a land-based telephone system and other components.

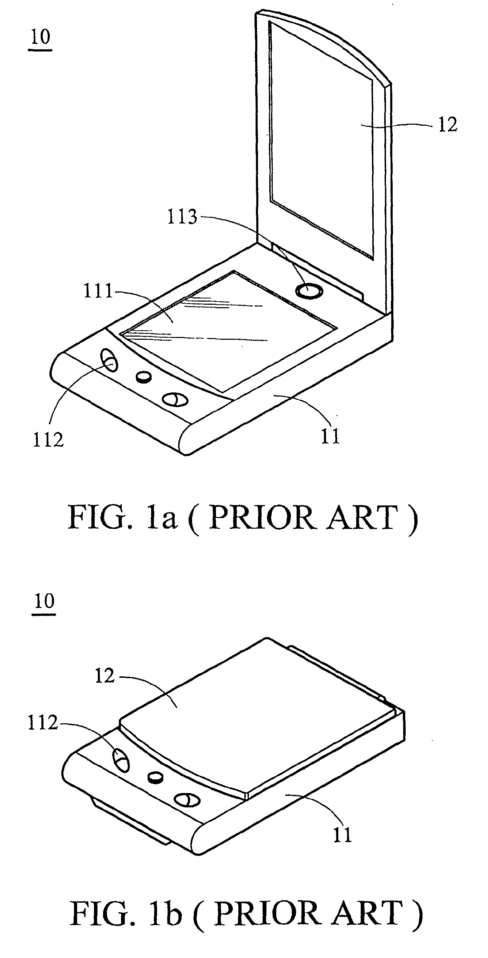

Recently, there is a hand-held device comprising a combined communication terminal of a mobile phone and a PDA. Such conventional hand-held device is shown in Fig. 1a and Fig. 1b. The hand-held device 10 comprises a panel assembly 11 and a cover 12. The panel assembly 11 is used as a main portion of the hand-held device 10, and is provided with a screen 111, several buttons 112 and a speaker 113. As stated above, the screen 111 may be a touch-sensitive display for displaying and entering information, and the buttons 112 can enter information. The speaker 113 can play music, and is also used as a receiver when a calling signal transmitted from another communication device, such as a mobile phone, is received by the hand-held device 10. Based on software built in the hand-held device 10, the volume of speaker 113 can be enlarged when the music is played, and it can be lowered when the speaker 113 is used as a receiver. It is noted that the cover 12 in the conventional hand-held device 10 simply protects the panel assembly 11.

The conventional hand-held device has the following disadvantages:
1. The speaker 113 is provided with two functions: one is music playing, and the other is used as a receiver. Since these two functions are switched based on the software, the volume of the speaker 113 may be not properly adjusted. Thus, the volume of the speaker 113 may be too loud when the speaker 113 is used as a receiver. As a result, the user may feel uncomfortable due to abnormal volume.
2. When the calling signal is received, ear of the user must touch the speaker 113. Since the speaker 113 is disposed on the panel assembly 11, face of the user touches the panel assembly 11. Thus, it is easy to dirty the panel assembly 11.
3. Since the speaker 113 is disposed on the panel assembly 11, a porting of the speaker 113 is limited due to limited space of the panel assembly 11. Thus, the audio quality of the speaker is restrained.

In addition, a conventional PDA is similar to the conventional hand-held device. That is, a cover of the conventional PDA simply protects its panel assembly, and its speaker is also disposed on the panel assembly. Thus, the conventional PDA also has the above disadvantages.

### SUMMARY OF THE INVENTION

In order to address the disadvantages of the aforementioned hand-held device, the invention provides a hand-held device that can avoid contamination of its panel assembly.

Another purpose of this invention is to provide a cover adapted for a hand-held device and provided with a receiver and a speaker.

Still another purpose of this invention is to provide a cover adapted for a PDA and provided with a speaker.

Accordingly, the invention provides a hand-held device that comprises a panel assembly, a cover, a speaker and a receiver. The cover, having a first surface facing the panel assembly and a second surface opposite to the first surface, is disposed on the panel assembly in a rotatable manner. The speaker is disposed on the first surface of the cover. The receiver is disposed on the second surface of the cover.

In a preferred embodiment, the hand-held device further comprises a detect switch system electrically coupled to the speaker and the receiver. The detect switch system actuates the speaker and the receiver based on the calling signal.

Furthermore, the detect switch system is disposed inside the panel assembly or the cover.

In another preferred embodiment, the panel assembly is provided with a concave portion, and the cover is provided with a protrusion corresponding to the concave portion.

Furthermore, the protrusion is integrally formed on the cover, and the speaker is disposed on the protrusion. The protrusion is provided with a hollow portion for enlarging a porting of the speaker.

In another preferred embodiment, the hand-held device further comprises a digital camera and a vibrator. The digital camera is disposed on the cover. The vibrator, disposed inside the cover and electrically coupled to the detect switch system, vibrates the cover when the calling signal is received.

In another preferred embodiment, this invention provides a cover for a PDA. The cover comprises a body, and a speaker disposed on the body.

### BRIEF DESCRIPTION OF THE DRAWINGS

The invention is hereinafter described in detail with reference to the accompanying drawings in which:
Fig. 1a is a schematic view depicting a conventional hand-held device;
Fig. 1b is a schematic view depicting the hand-held device in Fig. 1a, wherein the hand-held device is folded;
Fig. 2a is a schematic view depicting a hand-held device as disclosed in this invention;
Fig. 2b is a schematic view depicting the hand-held device in Fig. 2a, wherein the hand-held device is folded;
Fig. 3a is a schematic view depicting a variant embodiment of the hand-held device in Fig. 2a;
Fig. 3b is a schematic view depicting the hand-held device in Fig. 3a, wherein the hand-held device is folded;
Fig. 4a is a schematic view depicting a PDA as disclosed in this invention; and
Fig. 4b is a schematic view depicting a variant embodiment of the PDA in Fig. 4a.

### DETAILED DESCRIPTION OF THE INVENTION

### First embodiment

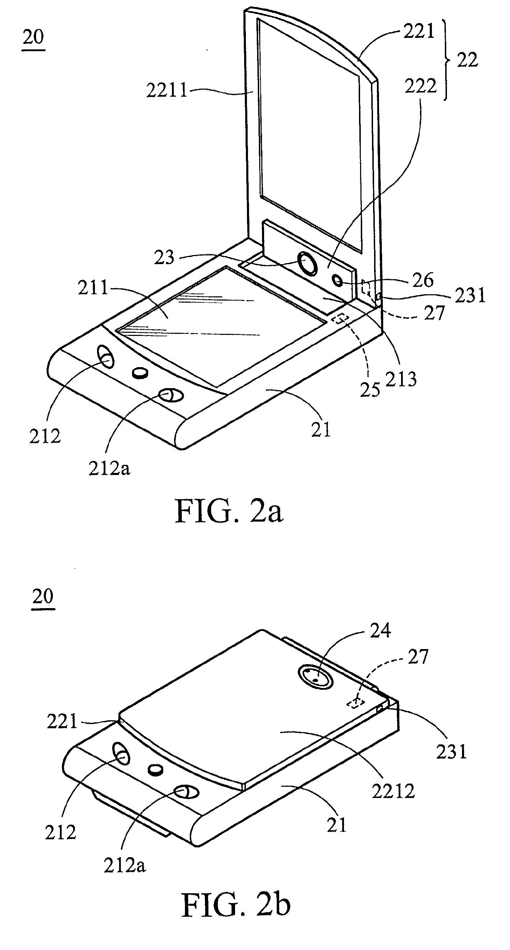

Referring to Fig. 2a and Fig. 2b, a hand-held device 20, as disclosed in this invention, comprises a panel assembly 21, a cover 22, a speaker 23, a receiver 24, a detect switch system 25, a digital camera 26, and a vibrator 27.

The panel assembly 21 is used as a main portion of the hand-held device 20, and is provided with a screen 211, several buttons 212, a concave portion 213, and other components. Like the conventional hand-held device, the screen 211 may be a touch-sensitive display for displaying and entering information, and the buttons 212 can enter information. It is noted that there is a received button 212a, for stopping the speaker 23 and actuating the receiver 24, among the buttons 212 in this embodiment.

The cover 22 is disposed on the panel assembly 21 in a rotatable manner. The cover 22 comprises a body 221 and a protrusion 222. The body 221 is provided with a first surface 2211 and a second surface 2212 opposite to the first surface 2211. When the hand-held device 20 is folded, the first surface 2211 faces the panel assembly 21. The protrusion 222 corresponds to the concave portion 213 of the panel assembly 21, and is integrally formed on the first surface 2211 of the body 221 of the cover 22. The protrusion 222 is provided with a hollow portion for enlarging a porting of the speaker 23. Since the space of the porting of the speaker 23 is enlarged due to the hollow protrusion 222, the audio quality of the speaker 23 can be enhanced.

The speaker 23 is disposed on the protrusion 222 located at the first surface 2211 of the body 221 of the cover 22, and can be actuated when a calling signal is received. Music can be played through the speaker 23. It is noted that the speaker 23 can also deliver the voice from the clearance or spacer or a special slot 231 between the panel assembly 21 and the cover 22. In Fig. 2b, the slot 231 is disposed at the end surface of the cover 22. Thus, even if the hand-held device 20 is folded as shown in Fig. 2b, the speaker 23 can also deliver the voice through the slot 231.

As shown in Fig. 2b, the receiver 24 is disposed on the second surface 2212 of the body 221 of the cover 22, and it can be actuated when a calling signal is received.

The detect switch system 25 may be disposed inside the panel assembly 21 or the cover 22. In Fig. 2a, the detect switch system 25 is disposed inside the panel assembly 21, and is electrically coupled to the speaker 23 and the receiver 24 and the vibrator 27. For example, the detect switch system 25 may be electrically connected to the speaker 23 and the receiver 24 and the vibrator 27 by wire or circuit board (not shown). Thus, when the calling signal is received, the detect switch system 25 controls the speaker 23 and the receiver 24 and the vibrator 27 to actuate or not.

The digital camera 26 is disposed on the body 221 of the cover 22. In Fig. 2a, the digital camera 26 is disposed on the first surface 2211 of the body 221 of the cover 22.

The vibrator 27 is disposed inside the cover 22, and is electrically coupled to the detect switch system 25. When the calling signal is received, the vibrator 27 can vibrate the cover 22 by the actuation of the detect switch system 25.

It is understood that the speaker 23 action or vibrator 27 action depends on user's definition.

Specifically, when the calling signal transmitted from another communication device, such as an incoming call from another mobile phone, is received by the hand-held device 20, the speaker 23 can be used as a ringing device for a phone. Thus, the message calling from the user of another communication device can be heard through the speaker 23, because the speaker 23 can offer loudly voice. At the same time, the vibrator 27 is actuated.

Then, the user pushes down the received button 212a, the speaker 23 and vibrator 27 stop action and the receiver 24 is actuated. The user can hold on the side of ear to communication.

It is noted that the receiver 24 may be actuated while the speaker 23 is actuated. Thus, when the received button 212a is pushed down, the speaker 23 and vibrator 27 stop action and the receiver 24 is switched to the speech signal from the ring signal.

The user also can open the cover 22, then we have thedetect switch system 25 to actuate the speaker 23 and let the receiver 24 stop action.

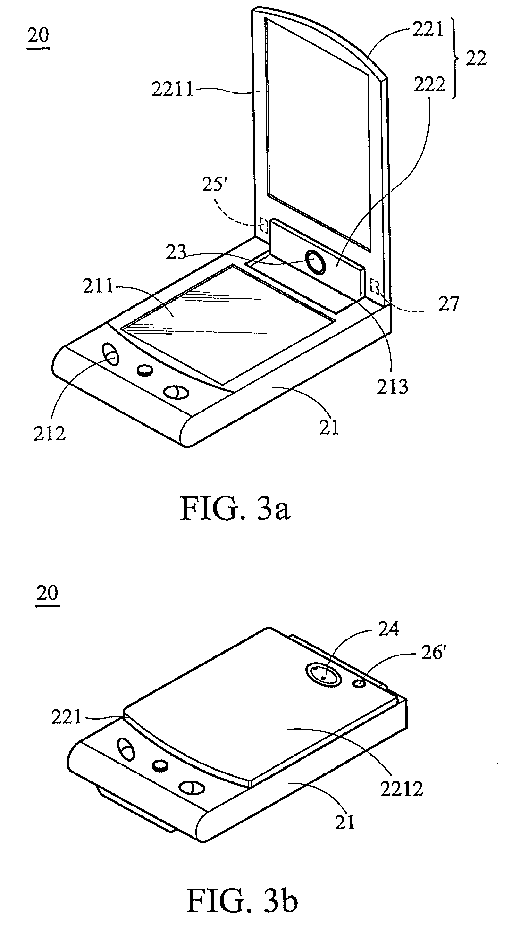

Fig. 3a and Fig. 3b are schematic views depicting a variant embodiment of the hand-held device 20 in Fig. 2a. In Fig. 3a, a detect switch system 25' is disposed inside the cover 22. In Fig. 3b, a digital camera 26' is disposed on the second surface 2212 of the body 221 of the cover 22.

The hand-held device 20, as disclosed in this invention, has the following advantages:
1. Since the receiver 24 is actuated when the received button is pushed down, the volume of the receiver 24 can be properly preset. Thus, the user will not feel uncomfortable due to abnormal volume like the conventional device.
2. Since the receiver 24 is disposed on the second surface 2212 of the body 221 of the cover 22, face of the user can only touch the cover 22. Thus, the face of the user will not touch the panel assembly 21 so as to dirty the panel assembly 21.
3. Since the speaker 23 is disposed on the hollow protrusion 222 of the cover 22, the porting of the speaker 23 can be enlarged. Thus, the audio quality of the speaker 23 is enhanced.
4. Since both the receiver 24 and the speaker 23 are disposed on the cover 22, the cover 22 can be multi-functional. Thus, unlike the conventional device, the cover 22 is not simply used to protect the panel assembly 21.
5. Since the digital camera 26 is disposed on the cover 22, the used range of the digital camera 26 can be enlarged due to the rotation of the cover 22.
6. Since the vibrator 27 is disposed inside the cover 22, the user can easily acknowledge the incoming call due to the vibration of the vibrator 27.

### Second embodiment

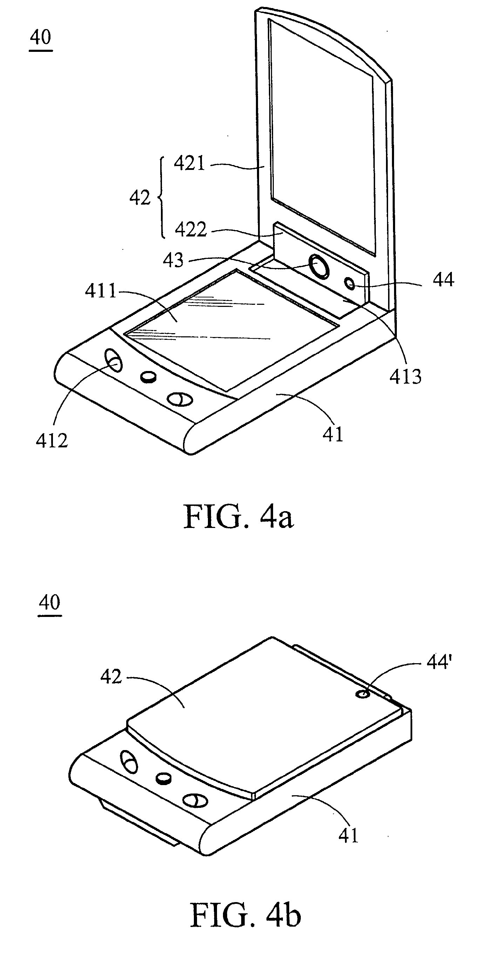

Referring to Fig. 4a and Fig. 4b, a PDA 40, as disclosed in this invention, comprises a panel assembly 41, a cover 42, a speaker 43, and a digital camera 44.

The panel assembly 41 is used as a main portion of the PDA 40, and is provided with a screen 411, several buttons 412, a concave portion 413, and other components.

The cover 42 is disposed on the panel assembly 41 in a rotatable manner. The cover 42 is provided with a body 421 and a protrusion 422 corresponding to the concave portion 413 of the panel assembly 41. The protrusion 422 is integrally formed on the cover 42, and is provided with a hollow portion for enlarging a porting of the speaker 43. Since the space of the porting of the speaker 43 is enlarged due to the hollow protrusion 422, the audio quality of the speaker 43 can be enhanced.

The speaker 43 is disposed on the protrusion 422 of the cover 42. Music can be played through the speaker 43. The digital camera 44 is disposed on the cover 42. In Fig. 4a, the digital camera 44 is disposed on a surface, facing the panel assembly 41, of the cover 42. In Fig. 4b, the digital camera 44' is disposed on another surface of the cover 42.

The PDA 40, as disclosed in this invention, has the following advantages:
1. Since the speaker 43 is disposed on the hollow protrusion 422 of the cover 42, the porting of the speaker 43 can be enlarged. Thus, the audio quality of the speaker 43 is enhanced.
2. Since the speaker 43 is disposed on the cover 42, the cover 42 can be multi-functional. Thus, unlike the conventional device, the cover 42 is not simply used to protect the panel assembly 41.
3. Since the digital camera 44 is disposed on the cover 42, the used range of the digital camera 44 can be enlarged due to the rotation of the cover 42.

While the invention has been particularly shown and described with reference to a preferred embodiment, it will be readily appreciated by those of ordinary skill in the art that various changes and modifications may be made without departing from the spirit and scope of the invention. It is intended that the claims be interpreted to cover the disclosed embodiment, those alternatives which have been discussed above, and all equivalents thereto.

## Claims

1. A hand-held device comprising:
a panel assembly;
a cover, having a first surface facing the panel assembly and a second surface opposite to the first surface, disposed on the panel assembly in a rotatable manner;
a speaker disposed on the first surface of the cover; and
a receiver disposed on the second surface of the cover.

2. The hand-held device as claimed in claim 1, further comprising:
a detect switch system, electrically coupled to the speaker and the receiver, for actuating the speaker and the receiver based on a calling signal.

3. The hand-held device as claimed in claim 2, wherein the detect switch system is disposed inside the panel assembly.

4. The hand-held device as claimed in claim 2, wherein the detect switch system is disposed inside the cover.

5. The hand-held device as claimed in claim 1, wherein the panel assembly is provided with a concave portion, and the cover is provided with a protrusion corresponding to the concave portion.

6. The hand-held device as claimed in claim 5, wherein the protrusion is integrally formed on the cover.

7. The hand-held device as claimed in claim 5, wherein the speaker is disposed on the protrusion.

8. The hand-held device as claimed in claim 7, wherein the protrusion is provided with a hollow portion for enlarging a porting of the speaker.

9. The hand-held device as claimed in claim 1, further comprising:
a digital camera disposed on the first surface of the cover.

10. The hand-held device as claimed in claim 1, further comprising:
a digital camera disposed on the second surface of the cover.

11. The hand-held device as claimed in claim 1, further comprising:
a vibrator, disposed inside the cover and electrically coupled to the detect switch system, for vibrating the cover when a calling signal is received.

12. The hand-held device as claimed in claim 1, further comprising:
a received button, for stopping the speaker and actuating the receiver, disposed on the panel assembly.

13. The hand-held device as claimed in claim 1, wherein the cover is provided with a slot communicating with the speaker.

14. A cover for a PDA comprising:
a body; and
a speaker disposed on the body.

15. The cover as claimed in claim 14, wherein the body is provided with a protrusion, and the speaker is disposed on the protrusion.

16. The cover as claimed in claim 15, wherein the protrusion is integrally formed on the body.

17. The cover as claimed in claim 15, wherein the protrusion is provided with a hollow portion for enlarging a porting of the speaker.

18. The cover as claimed in claim 14, further comprising:
a digital camera disposed on the body.
